# DEMANDE DE BREVET EUROPEEN

(11) **EP 1 602 818 A1**
(43) Date de publication de la demande: **07.12.2005**
(21) Numéro de dépôt: 04016792.6
(22) Date de dépôt: 16.07.2004
(51) Int. Cl.: F02M 27/04, F01N 3/08, B01D 53/32

(54) **Dispositif mécanique magnétique à structure perfectionnée, suspectible d'améliorer les caractéristiques fluido-dynamiques et la rentabilité des produits gazeux et fluides, dérivés du pétrole**

(30) Priorité: 17.05.2004 IT MI20040983
(71) Demandeur: Dall'Angelo, Daniele, I-20020 Lainate (Milano) (IT)
(72) Inventeur: Dall'Angelo, Daniele, I-20020 Lainate (Milano) (IT)

(57) **Abrégé**

La présente invention a pour objet un dispositif mécanique magnétique à structure perfectionnée, suceptible d'améliorer les caractéristiques fluido dynamiques et la rentabilité des produits gazeux et fluides dérivés du pétrole, qui comprend, en succession, à l'intérieur d'une bâche de confinement, un premier groupe à pile magnétique pour casser la chaîne du carbone dans les produits fluides et gazeux dérivés du pétrole et un autre groupe à pile magnétique pour aligner les filets fluides et aplatir l'angle de soudure des tétraèdes de carbone, pour l'allongement de la chaîne elle-même.

## Description

La présente découverte a comme objet un dispositif mécanique magnétique à structure perfectionnée, susceptible d'améliorer les caractéristiques fluido dynamiques et la rentabilité des produits gazeux et fluides dérivés du pétrole.

En particulier, le dispositif présent est en mesure d'agir sur la chaîne du carbone des produits dérivés du pétrole, liquides et gazeux, comme le gaz méthane, l'éther du pétrole ou ligroine,ligroine et essences légères, essence, kérosène, huiles volatiles, huiles combustibles, huiles diesel, huiles lubrifiantes,vaselines,paraffines,naphte,mazout,produits liquides et gazeux dérivés des phénomènes de combustion,comme gaz d'échappement ou fumées. Est connu qu'actuellement on utilise pour l'alimentation des moteurs à combustion interne des filtres pour traiter le pétrole ou les dérivés.

Ces derniers ont principalement le but de déferrer les liquides traités et de retenir particules en suspension ou paraffines ou des autres produits qui pourraient provoquer des inconvénients dans la chambre de combustion qui généralement équipe les moteurs à combustion interne à cycle Otto ou Diesel.

La découverte utilise l'affect combiné des champs magnetiques,en agissant sur la tension du fluide électronique de la chaîne moléculaire, en grevant sur la structure tétraédrique des composés du carbone et sur les liaisons covalentes spatiales qui se développent dans les trois dimensions,comme on peut voir dans la fig.4.

Le but de la découverte est agir sur les dérivés fluides du pétrole et sur les dérivés gazeux de ces derniers, comme le gaz méthane, qui est principalement utilisé dans la production de l'énergie électrique dans les centrales thermoélectriques, en reformant pour produire modernes gaz de ville et pour différents usages chimiques,en cas de fours ou de centrales à combustion,avec usage de bruleur,avec ou sans chambre de combustion.

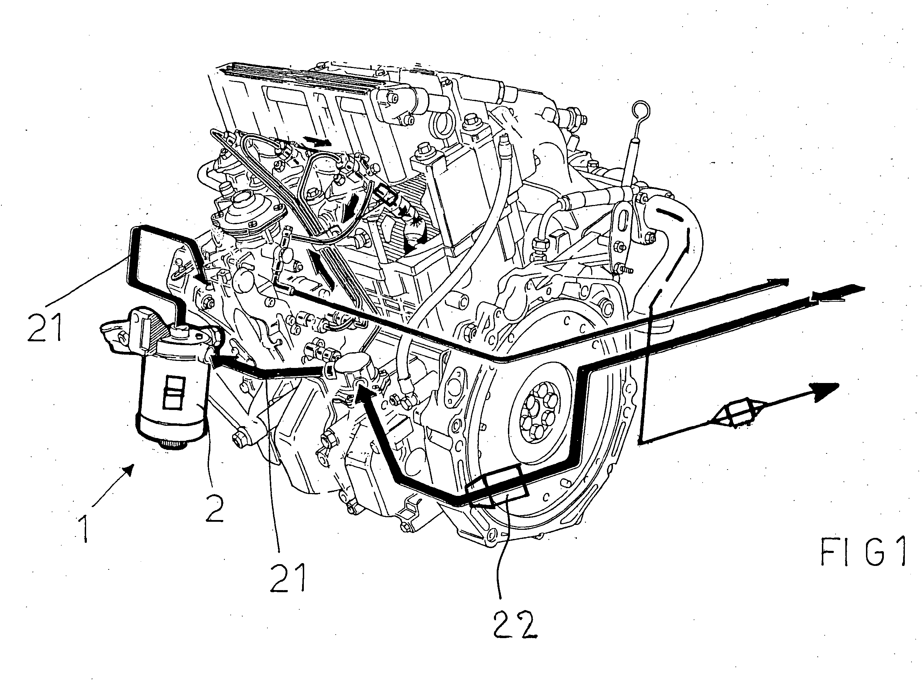

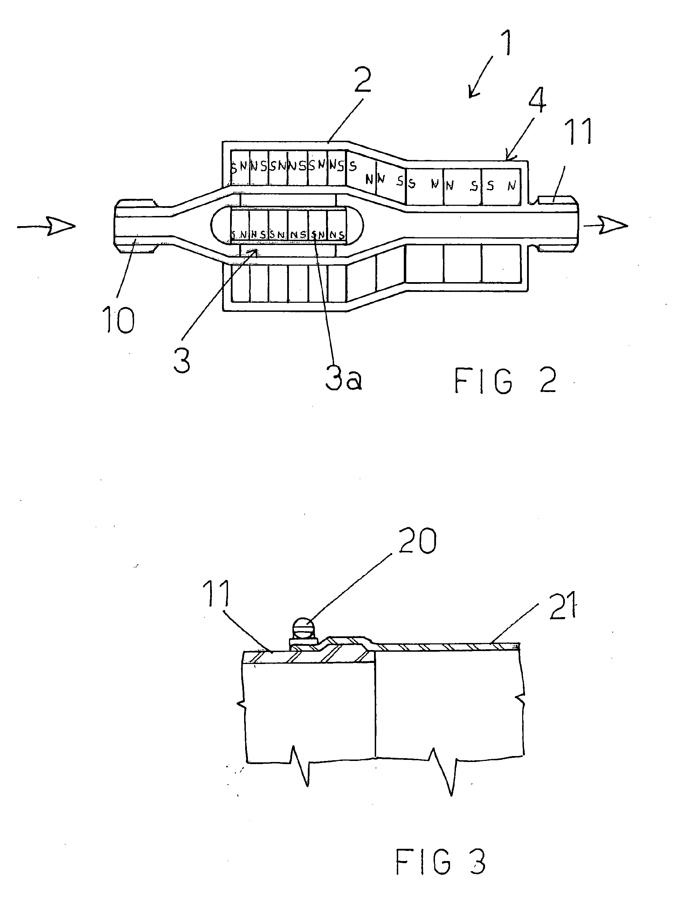

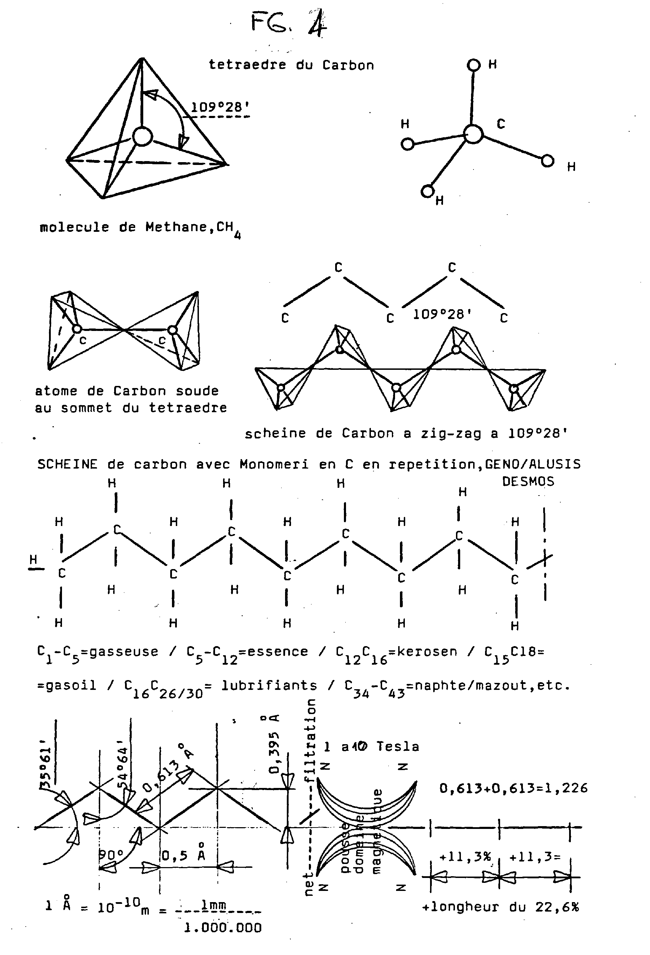

L'invention peut être appliquée entre le gicleur nébuliseur et la flamme de combustion pour créer une augmentation de volume, immédiatement utilisable à la combustion et il peut aussi être utilisé sur poudres très fines de charbon et avec les fluides dérivés du pétrole, devant la pompe d'alimentation, comme on peut voir dans la figure 1 n°22.

Le dispositif mécanique magnétique,objet de cet appareil, opportunément modifié et mis à jour, peut aussi être utilisé pour le traitement des fumées d'échappement en remplacement ou en union de électrofiltres et dans les pots d'échappement des moteurs à combustion interne, en remplacement ou union avec les catalyseurs, avec le but de réduire près du 30% les substances polluantes, toujours en accomplement au dispositif qui traite le fluide devant la pompe d'alimentation.

Ces buts sont atteints par un dispositif mécanique magnétique à structure perfectionnée, susceptible d'améliorer les caractéristiques fluido dynamiques et la rentabilité des produits gazeux et fluides dérivés du pétrole, selon l'invention, qui comprende,en succession,à l'intérieur de une bâche de confinement ,un premier group à pile magnétique pour casser la chaîne du carbone dans les produits fluides et gazeux dérivés du pétrole et un autre group à pile magnétique pour aligner les filets fluides et aplatir l'angle de soudure des tétraèdres de carbone,pour l'allongement de la chaîne elle-même.

Des autres caractéristiques et avantages de l'objet de la présente invention résulteront plus en évidence à travers un exam. de la description d'une forme d'esecution préférée,mais pas exclusive,d'un dispositif mécanique magnétique à structure perfectionnée, susceptible d'améliorer les caractéristiques fluido dynamiques,la rentabilité des produits gazeux et fluides dérivés du pétrole,illustré à titre indicatif et pas limitatif avec le secours des pièces jointes,où :
L'image 1 représente le dispositif,appliqué à un moteur à combustion interne ;
L'image 2 représente le dispositif, schématiquement vu en section
L'image 3 mit en évidence un possible forme de réalisation des moyens d'embrayage du dispositif.

En nous référant aux symboles numériques des susdites images, le dispositif mécanique magnétique à structure perfectionnée, susceptible d'améliorer les caractéristiques fluido dynamiques, la rentabilité des produits gazeux et fluides dérivés du pétrole, selon le dispositif qui est indiqué dans sa globalité avec le nombre de repère 1, comprend, à l'intérieur de une
bâches de confinement, générique ment indiqué avec le nombre 2,un premier group 3,à pile magnétique, qui est positionné d'une façon coaxiale et qui a une intensité magnétique évaluable de 1 à 10 teslas.

En aval du premier group 3 est prévu un deuxième group à pile magnétique 4,qui a la fonction d'aligner les filets fluides et aplatir l'angle de soudure des tétraèdres de carbone, pour allonger la chaîne.

Le bâche de confinement présente une embouchure d'entrée 10 et une de sortie 11, qui peuvent être de tout façon positionnées et en correspondance de lesquelles on peut utiliser des colliers 20 pour la connexion des tubes de raccordement,génériquement indiqués avec 21, lesquelles peuvent être réalisées en gomme ou avec un autre matériel apte.

Le dispositif est principalement à effet mécanique magnétique, avec valeurs de champ de 1 à 10 teslas et de 10.000 à 100.000 gauss.

En autre,on peut utiliser des systèmes à électro-magnetique avec valeurs de champ superiéurs,en fonction du cas technique et des problématiques à résoudre.
La disposition des piles magnétiques à l'intérieur des filtres qui sont positionnés sur le conduit d'injection du carburant au moteur, permit de réaliser une allure des lignes de force relatives aux champs magnétiques, qui consent d'obtenir dans le premier group magnétique la rupture de la chaîne du carbone avec l'utilisation de bagues coaxials,qui sont réalisés avec des alliages spécifiques comme NdF et B, et/ou des autres alliages et/ou superalliages magnétisés dans le plan SNNSSNNS,en réalisant une série de
lignes de force qui sortent du plan et vont vers le centre,et qui sont opposées aux lignes de force qui sortent de l'aimant central, indiqué avec 3a.

Les lignes se poussent et s'écartent les unes contre les autres, en soumettant le fluide de passage à un véritable écrasement que, selon l'intensité appliquée, cassent la chaîne de carbone et l'aplatent,en accélérant
le fluide vers l'embouchure de sortie 11.

En correspondance de ce dernier,on a des autres lignes de force,toujours opposées et qui s'écartent les unes les autres,qui maintiennent la chaîne plate,avant que le fluide entre dans la chambre de combustion, en provoquant ici une augmentation de volume ou un gonflement du fluide traité.

Les embouchures 10 et 11 peuvent être filetés ou à bridés ou éventuellement prévues pour l'utilisation des raccordements à colliers sus décrit.

Les raccordements peuvent être réalisés en acier inoxydable ou magnetique,en laiton,en aluminium ou avec un autre matériel apte.

Ils peuvent présenter n'importe quelle conformation.

La structure interne ou externe est réalisée avec un matériel amagnétique, comme l'acier inox, le laiton,la plastique,l'aluminium ou avec un autre matériel qui peut être assemblé d'une façon manuelle ou automatique.
Les groups des piles magnétiques sont avantageusement protégés par un petit tube de laiton externe,trés fin ou d'un autre matériel apte au but.

Le présent dispositif qui presente,dans la forme décrite,une conformation fondamentalement cylindrique,trouve son application directement à contact avec les injecteurs pour moteurs à combustion interne,ou devant la pompe d'alimentation ou dans le filtre, comme on peut voir dans l'image 1,ou directement à contact en aval des injecteur pour moteurs à reaction,comme les turbines des avions ou des autres type de moteurs qui utilisent les fluides dérivés du pétrole pour la combustion.

Cet appareil est aussi susceptible de nombreuses modifications et variantes, qui rentrent dans le domaine du principe inventif.

En outre les détails constructifs peuvent être remplacés avec des autres éléments,téchniquement équivalents.

Donc on peut utiliser n'importe quel matériel, selon les exigences, à condition qu'ils soient compatibles avec l'usage specifique,les dimensions et les formes contingents et on peut choisir la position de la découverte selon les cas techniques en examen.

## Revendications

1. Dispositif mécanique magnétique à structure perfectionnèe, susceptible d'améliorer les caractéristiques fluido dynamiques et la rentabilité des produits gazeux et fluides dérivés du pétrole, qui comprende,en succession,à l'intérieur de une bâche de confinement,un premier group à pile magnétique pour casser la chaîne du carbone dans les produits fluides et gazeux dérivés du pétrole et un autre group à pile magnétique pour aligner les filets fluides et aplatir l'angle de soudure des tétraèdres de carbone, pour l'allongement de la chaîne elle-même.

2. Dispositif mécanique, selon la revendication précédente, **caractérisé** du fait que le premier group à pile magnétique est coaxial.

3. Dispositif mécanique, selon une ou plus revendications précédentes, **caractérisé** du fait que ces groups à pile magnétique se trouvent à l'intérieur d'un filtre pour gasoil et pareil et/ou devant la pompe à injection du carburant.

4. Dispositif,selon une ou plus revendications précédentes, **caractérisé** du fait que lui-même est appliqué sur le moteur avant des injecteurs.

5. Dispositif,selon une ou plus revendications précèdentes, **caractérisé** du fait que lui-même est appliqué sur le pot d'échappement pour filtrer les composés épuisés de la combustion et pour réduire et traiter les substances polluantes.

6. Dispositif, selon une ou plus revendications précédentes, **caractérisé** du fait que le second group à pile magnétique tende à déplacer l'angle de soudure au sommet du tétraèdre des atomes de carbone,de un angle de 109°28' à un angle substantiellement de 180° avec une augmentation du 22,6%,comme on peut voir dans la figure 4.

7. Dispositif,selon une ou plus revendications précédentes,**caractérisé** du fait qu'il comprend des moyens de masquage au chaleur et des circuits de refroidissement pour éviter que le champ magnétique doive travailler à des températures au-delà de 60°.

8. Dispositif,selon une ou plus revendications précédentes,**caractérisé** du fait qu'il est réalisé avec des matériels aptes à être posés dans la partie finale des pots des voitures et pareil.

9. Dispositif,selon une ou plus revendications précèdentes, **caractérisé** du fait que les groups à pile magnétique réalisent un champ électro-magnetique qui se trouve entre le 10.000 et les 100.000 gauss et de 1 à 10 teslas.

10. Dispositif,selon une ou plus revendications précédentes,**caractérisé** du fait qu'il est en mesure de traiter tous les fluides dérivés du pétrole, et aussi les gaz et les produits usés et certains type de fluides aqueux, pour développer l'économie énergétique et pour réduire les substances polluantes du 20% environ.
